# EUROPÄISCHE PATENTANMELDUNG

(11) **EP 0 718 441 A1**
(43) Veröffentlichungstag der Anmeldung: **26.06.1996**
(21) Anmeldenummer: 95116329.4
(22) Anmeldetag: 17.10.1995
(51) Int. Cl.: E01C 19/20, A01C 17/00

(54) **Splittstreuer**

(30) Priorität: 21.12.1994 DE 4445711
(71) Anmelder: BOMAG GmbH, D-56154 Boppard (DE)
(72) Erfinder: Blancke, Uwe, Ing. grad., D-56070 Koblenz (DE); Hasselman, Rolf, Dipl.-Ing., D-56072 Koblenz (DE); Kremer, Klaus, D-56068 Koblenz (DE); Kürten, Hans-Werner, D-56290 Gödenroth (DE); Ueberbach, Karl-Otto, Dipl.-Ing., D-53489 Sinzig (DE)
(74) Vertreter: Brommer, Hans Joachim, Dr.-Ing.

(57) **Zusammenfassung**

Die Erfindung betrifft einen Splittstreuer mit einem auf einem Fahrgestell angeordneten Behälter für den auszubringenden Splitt, der durch Fördermittel auf eine sich quer zur Fahrtrichtung erstreckende Streuvorrichtung gelangt. Der Streuvorrichtung ist eine Mengen-Meßeinrichtung (13,14) nachgeschaltet, die zumindest von einem Teilstrom des von ihr abgestreuten Splitts passiert wird.

## Beschreibung

Die Erfindung betrifft einen Splittstreuer mit einem auf einem Fahrgestell angeordneten Behälter für den auszubringenden Splitt, der durch Fördermittel auf eine sich quer Zur Fahrtrichtung erstreckende Streuvorrichtung gelangt, wobei die Menge des abgestreuten Splitts zu regulieren ist.

Ein derartiger Splittstreuer ist durch die DE-OS 41 18 997 bekannt. Dabei weist der Splittstreuer einen Neigungsmesser auf, der die Neigung des schwenkbar gelagerten Splittbehälters und der damit verbundenen Streuvorrichtung in Form einer Streubohle in Fahrtrichtung erfaßt. Dieser Neigungsmesser ist mit einer Steuereinrichtung verbunden, die bei Fahrt des Splittstreuers die voreingestellte Neigung des Behälters und damit der Streubohle gegenüber der Horizontalen überwacht. Ändert sich die Neigung der Fahrbahn, so erfaßt dies der Neigungsmesser und gibt ein Signal an die Steuereinrichtung ab, die den Behälter mitsamt der Streubohle entsprechend der festgestellten Abweichung aus der vorgegebenen Lage anhebt oder absenkt. Auf diese Weise soll eine gleichmäßige Splittabwurfmenge unabhängig von der Neigung der Fahrbahn gewährleistet werden.

Der vorliegenden Erfindung liegt die Aufgabe zugrunde, den bekannten Splittstreuer hinsichtlich der Regulierung der Splittabwurfmenge zu verbessern. Dabei soll sich der erfindungsgemäße Splittstreuer sowohl durch eine genauere Mengenregelung als auch durch zuverlässigen und kostengünstigen Aufbau auszeichnen.

Gelöst wird diese Aufgabe erfindungsgemäß dadurch, daß der Splittstreuer eine Mengen-Meßeinrichtung aufweist, die der Streuvorrichtung nachgeschaltet ist und zumindest von einem Teilstrom des von der Streuvorrichtung abgestreuten Splitts passiert wird. Anstelle der bisher praktizierten Neigungsmessung, die nur indirekt ein Maß für die abgestreute Splittmenge ist, wird erfindungsgemäß also die abgestreute Splittmenge unmittelbar erfaßt und zur Regelung herangezogen. Die Erfindung arbeitet daher wesentlich genauer als der bisher bekannte Splittstreuer, insbesondere können sich Einflüsse aus der Temperatur, der Feuchtigkeit und der Körnung des Splittmaterials nicht mehr negativ auf die Mengenregelung auswirken.

Hinsichtlich der konstruktiven Ausgestaltung der Mengen-Meßeinrichtung bieten sich dem Fachmann verschiedene Möglichkeiten, unter anderem eine Bandwaage, die kontinuierlich von vorzugsweise einem Teilstrom des abgestreuten Splitts beaufschlagt wird und diesen dann auf die Fahrbahn oder auf ein Fördermittel zum Rücktransport in den Behälter abwirft, oder ein mechanisches Durchflußmeßgerät, das den Massen- oder Volumendurchfluß erfaßt. Besonders zweckmäßig ist es in dessen, die Mengenmessung berührungslos vorzunehmen, insbesondere im Rahmen einer Ultraschallmessung oder auf optischem Weg. Im letztgenannten Fall empfiehlt sich die Verwendung mehrerer quer zum abgestreuten Splittstrom angeordneter Lichtschranken, deren Unterbrechung durch Splitteilchen jeweils Zählsignale auslöst. Diese Zählsignale werden aufsummiert und sind ein Maß für die Teilchenzahl pro Zeiteinheit.

Damit die Splitteilchen beim Passieren der Mengenmeßeinrichtung mit Sicherheit vereinzelt sind, empfiehlt es sich, einen abgewinkelten Zuführkanal mit gegenüberliegenden schrägstehenden Prallflächen zu verwenden. Dadurch wird der Splitt mehrfach zu Fallrichtungsänderungen gezwungen und die unter Umständen vorhandenen Splittverklebungen - insbesondere bei bitumiertem Splitt - werden aufgelöst. Der Splitt rieselt also als Einzelkorn am Zähler vorbei.

Die Mengen-Meßeinrichtung wird in an sich bekannter Weise an einen Regelkreis angeschlossen, der die Menge des abgestreuten Splitts im Sinne eines vorgegebenen Sollwertes regelt. Dabei ist es besonders zweckmäßig, den Regelkreis auch mit einem Sensor für die Fahrgeschwindigkeit des Splittstreuers zu verbinden, damit letztlich nicht die Splittmenge pro Zeiteinheit, sondern die Splittmenge pro überfahrener Fläche geregelt wird. Arbeitet man dabei mit einer Mengenregulierung durch Neigungsverstellung der Streubohle, so wirkt der Regelkreis in einfacher Weise auf diese Neigungsverstellung ein.

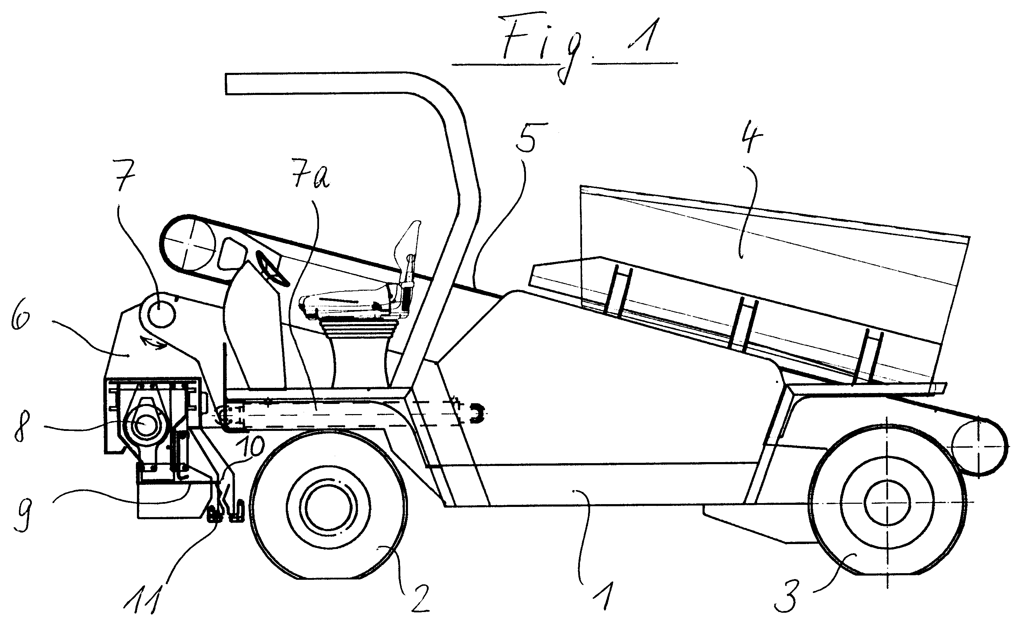

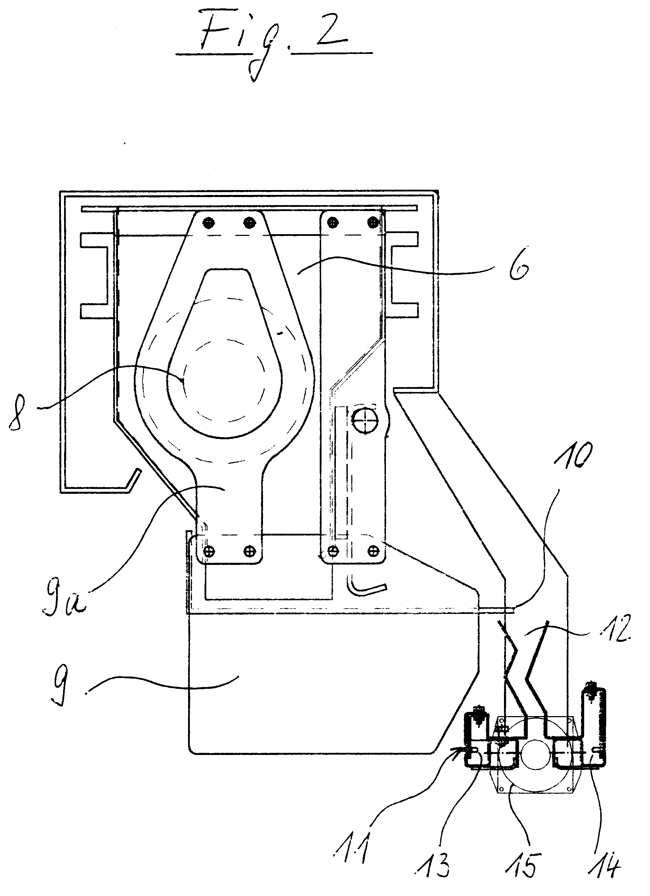

Weitere Merkmale und Vorteile der Erfindung ergeben sich aus der nachfolgenden Beschreibung eines Ausführungsbeispieles anhand der Zeichnung; dabei zeigt
- Figur 1: eine Seitenansicht des Splittstreuers in seiner Gesamtheit;
- Figur 2: eine Ausschnittvergrößerung der Streubohle aus Figur 1;
- Figur 2a: eine Ausschnittvergrößerung der Mengenmeßeinrichtung;
- Figur 3: eine Ansicht auf die Streubohle von vorn und
- Figur 4: den Regelkreis für die Streumengenregelung.

Der Splittstreuer besteht aus einem Fahrgestell 1 mit Vorderrädern 2 und Hinterrädern 3. Im rückwertigen Teil trägt das Fahrgestell einen Behälter 4 für den auszubringenden Splitt, wobei der Boden dieses Behälters durch ein umlaufendes Förderband 5 gebildet wird. Dieses Förderband verläuft in Fahrtrichtung ansteigend und endet oberhalb einer Streuvorrichtung, die im Ausführungsbeispiel aus einem Streubohlenkasten 6 mit Streubohle 9 besteht. Der Streubohlenkasten 6 erstreckt sich quer zur Fahrtrichtung und nahezu über die gesamte Fahrzeugbreite. Er ist über ein Schwenklager 7 an einem Ausleger im vorderen Bereich des Fahrgestelles derart aufgehängt, daß er entsprechend dem eingezeichneten Pfeil nach vorn oder hinten verschwenkt werden kann. Die gewünschte Schwenkposition wird durch einen gestrichelt dargestellten Hydraulikzylinder 7a eingestellt.

Im Inneren des Streubohlenkastens ist eine horizontal verlaufende Förderschnecke 8 angeordnet, die die gleichmäßige Verteilung des Splitts innerhalb des Streubohlenkastens sicherstellt. Der untere Boden des Streubohlenkastens wird durch die eigentliche Streubohle 9 gebildet, die in an sich bekannter Weise elastisch am Streubohlenkasten aufgehängt ist und durch einen Schwingungserreger in horizontale, quer zur Fahrtrichtung verlaufende, gerichtete Schwingungen versetzt werden kann. - Selbstverständlich liegt es im Rahmen der Erfindung an Stelle der Streubohle eine rotierende Streuwalze oder ein anderes Abwurfelement zu verwenden.

An die Abwurfkante 10 der Streubohle 9 schließt sich eine Mengenmeßeinrichtung 11 an, die sich jedoch nur über einen kleinen Teil der Arbeitsbreite der Streubohle erstreckt.

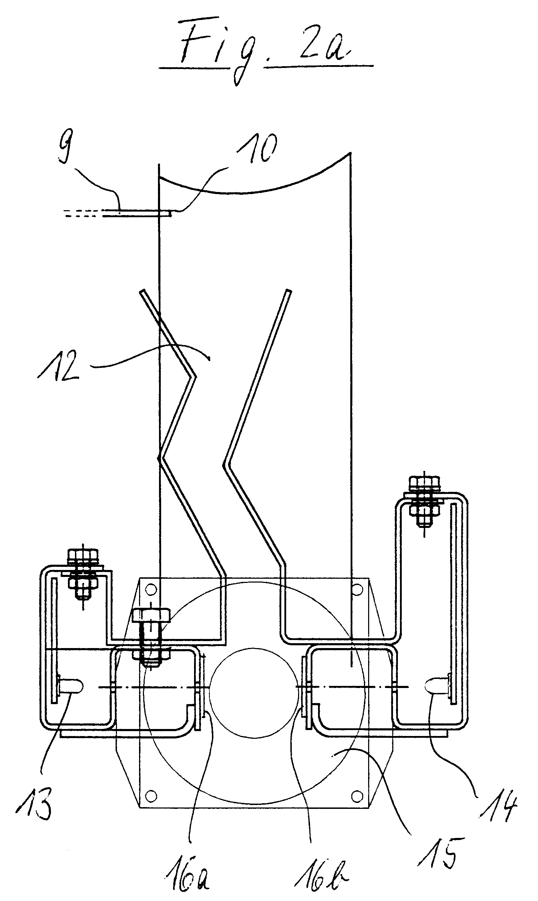

Die Mengenmeßeinrichtung geht deutlicher aus den Figuren 2 und 2a hervor. Sie weist einen mehrfach abgewinkelten Kanal 12 auf, der trichterförmig unterhalb der Abwurfkante 10 der Streubohle 9 beginnt und in die eigentliche Mengenmeßeinrichtung 11 mündet. Dort ist an der einen Seite eine etwa horizontal quer zur Fahrtrichtung verlaufende Reihe von Sendedioden 13 und dazu etwa horizontal auf der anderen Seite des Abwurfkanals gegenüberliegend eine weitere Reihe von Empfangsdioden 14 angeordnet. Anstelle von Dioden können selbstverständlich auch andere berührungslos arbeitende Lösungen wie etwa Laser, Zeilenkameras oder ähnliches eingesetzt werden.

Nach Passieren der Zähleinrichtung fallen die Splitteilchen auf die Fahrbahn.

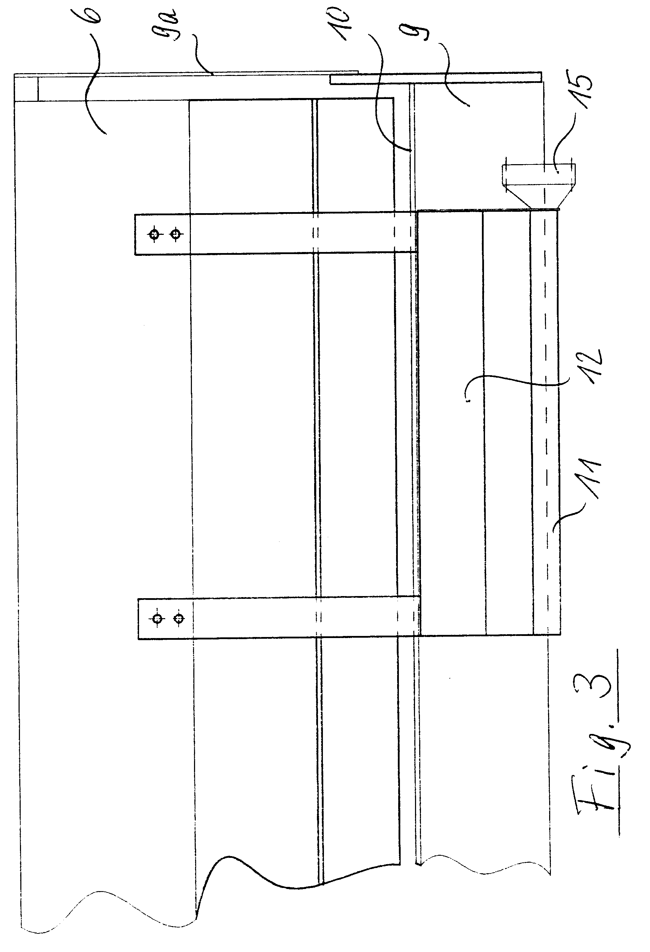

Wie insbesondere Figur 3 zeigt, erstreckt sich die Zähleinrichtung 11 mit ihrem mehrfach abgewinkelten Zuführkanal 12 nur über einen Teil der Arbeitsbreite der Streubohle, so daß auch nur ein Teilstrom des abgeworfenen Splitts erfaßt wird. Zur Erfassung der Streumenge der gesamten Bohle braucht lediglich der gemessene Teilstrom mit dem Faktor multipliziert werden, um den die Gesamtbohle länger ist als die gemessene Bohlenlänge.

Außerdem zeigt Figur 3, daß etwa in Höhe der Dioden ein Gebläse 15 angeordnet ist, das kontinuierlich oder intervallartig die Dioden von etwa abgelagertem Schmutzpartikeln freibläst. Statt dessen kann es aber auch zweckmäßig sein, die Dioden zu verkapseln, insbesondere in einem Hohlprofil anzuordnen und die Lichtdurchtrittsöffnungen zum Splitstrom mit Gläsern 16a, 16b gemäß Figur 2a zu verschließen. Die Dioden sind dann gegenüber der Umgebung abgeschirmt, so daß gegebenenfalls auf das Gebläse verzichtet werden kann.

Schließlich erkennt man in den Figuren 2 und 3 noch die elastische Aufhängung der Streubohle 9 an vertikalen Blattfedern 9a, wogegen die Mengenmeßeinrichtung 11 mit dem Streubohlenkasten 6 verbunden ist und daher nur die Schwenkbewegungen der Streubohle 9 um das Lager 7 mitmacht, nicht jedoch deren Horizontalvibrationen.

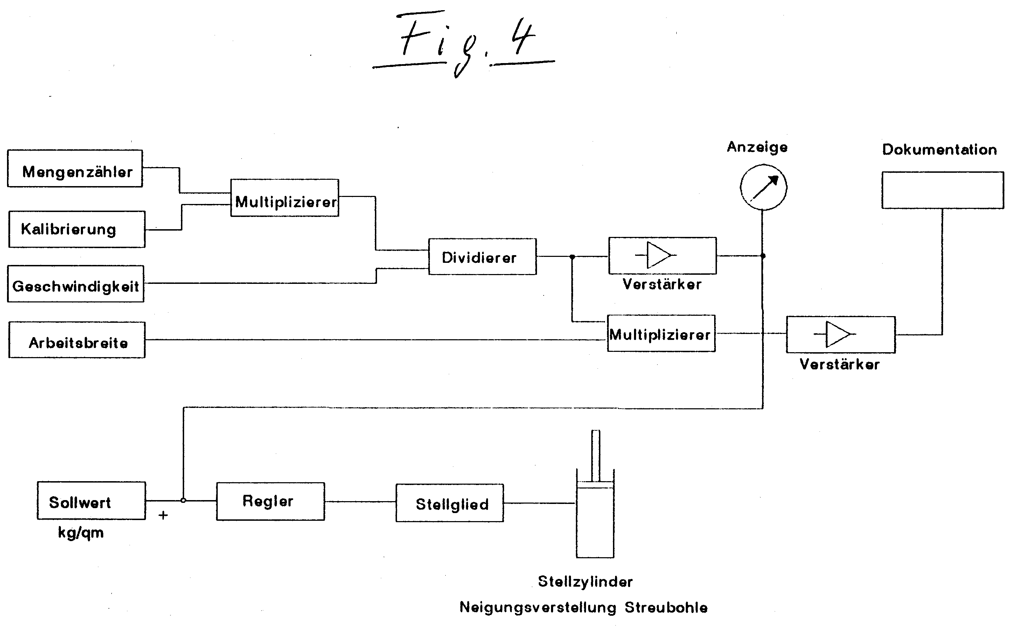

Figur 4 zeigt den Regelkreis für die Streumengenregelung. Dabei ist mittels der Kalibrierung eine Feineinstellung oder Eichung möglich, insbesondere für den Fall, daß stark unterschiedliches Material für den Splitt eingesetzt wird.

Die Erfassung der Arbeitsbreite ist dann zu berücksichtigen, wenn die Mengenmeßeinrichtung sich nur über einen Teil der Bohlenbreite erstreckt.

Die Funktion ist folgende: Die im Behälter 4 befindlichen Splitteilchen werden durch das Förderband 7 in den Streubohlenkasten 6 abgeworfen und dort durch die Schnecke 8 quer zur Fahrtrichtung gleichmäßig verteilt. Durch einen zwischen Streubohlenkasten 6 und Streubohle 9 vorhandenen Spalt rieselt der Splitt bis zur Abwurfkante 10 der Streubohle. Dabei ist der Spalt um ein vielfaches größer als der größte Durchmesser eines Splittkornes, wodurch die Gefahr einer Verstopfung am Spalt ausgeschlossen ist.

Von der Streubohlenkante 10 fallen die Splittkörner direkt oder über die Mengenmeßeinrichtung 11 auf die Fahrbahn.

Zeigt die Mengenmeßeinrichtung einen zu geringen Auswurf an, so wird durch die in Figur 4 gezeigte Regelung automatisch über den Zylinder 7a der Streubohlenkasten mit der Streubohle 9 etwas nach vorn geschwenkt, so daß das Gefälle der Streubohle zur Abwurfkante 10 hin zunimmt und der Splittabwurf erhöht wird. Entsprechend wird im umgekehrten Fall das Gefälle der Streubohle verringert.

Somit wird der Anstellwinkel der Streubohle in Abhängigkeit von Fahrgeschwindigkeit und Kalibrierungswert automatisch so eingeregelt, daß die vorgegebene Streumenge eingehalten wird. Die erreichten Streuqualitäten sind also nicht mehr Bediener- und/oder Fahrgeschwindigkeitsabhängig.

Die Straßenquerneigung (maximal 4 %) braucht im allgemeinen nicht berücksichtigt zu werden, da sie nur sehr geringe Einflüsse auf das Streuergebnis hat.

## Patentansprüche

1. Splittstreuer mit einem auf einem Fahrgestell (1) angeordneten Behälter (4) für den auszubringenden Splitt, der durch Fördermittel auf eine sich quer zur Fahrtrichtung erstreckende Streuvorrichtung (9) gelangt, wobei die Menge des abgestreuten Splitts zu regulieren ist,
dadurch gekennzeichnet,
daß der Splittstreuer eine Mengen-Meßeinrichtung (11) aufweist, die der Streuvorrichtung (9) nachgeschaltet ist und zumindest von einem Teilstrom des von der Streuvorrichtung (9) abgestreuten Splitts passiert wird.

2. Splittstreuer nach Anspruch 1,
dadurch gekennzeichnet,
daß die Mengen-Meßeinrichtung (11) berührungslos, insbesondere auf optischem Weg, arbeitet.

3. Splittstreuer nach Anspruch 2,
dadurch gekennzeichnet,
daß die Mengen-Meßeinrichtung (11) aus mehreren quer zum abgestreuten Splittstrom angeordneten Lichtschranken besteht, deren Unterbrechung durch Splitteilchen Zählsignale auslöst.

4. Splittstreuer nach Anspruch 1,
dadurch gekennzeichnet,
daß der Mengenmeßeinrichtung (11) eine Vereinzelungsvorrichtung, insbesondere Prallflächen zur Vereinzelung der Splitteilchen vorgeschaltet sind.

5. Splittstreuer nach Anspruch 4,
dadurch gekennzeichnet,
daß die Prallflächen einen abgewinkelten Zuführkanal (12) für die Splitteilchen bilden.

6. Splittstreuer nach Anspruch 1,
dadurch gekennzeichnet,
daß die Mengen-Meßeinrichtung (11) mit einem Gebläse (15) kombiniert ist.

7. Splittstreuer nach Anspruch 1,
dadurch gekennzeichnet,
daß die Mengenmeßeinrichtung (11) optische Elemente (13, 14) zur Erfassung der abgestreuten Splitteilchen aufweisen, die gegenüber der Umgebung verkapselt sind, wobei die Verkapselung zumindest in Richtung auf die zu erfassenden Splitteilchen durchsichtig ist.

8. Splittstreuer nach Anspruch 1,
dadurch gekennzeichnet,
daß die Mengen-Meßeinrichtung (11) an einen Regelkreis angeschlossen ist, der die Menge des abgestreuten Splitts im Sinne eines vorgegebenen Sollwertes regelt.

9. Splittstreuer nach Anspruch 8,
dadurch gekennzeichnet,
daß ein Sensor für die Fahrgeschwindigkeit des Splittstreuers an den genannten Regelkreis angeschlossen ist.

10. Splittstreuer nach Anspruch 8 oder 9, wobei die Mengenregulierung durch Neigungsverstellung der Streuvorrichtung (9) in Form einer Streubohle relativ zur Fahrtrichtung erfolgt,
dadurch gekennzeichnet,
daß die Mengen-Meßeinrichtung (11) auf die Neigungsverstellung der Streubohle einwirkt.

11. Splittstreuer nach einem der vorhergehenden Ansprüche,
dadurch gekennzeichnet,
daß die Streuvorrichtung (9) in Form einer Streubohle in ihrer Neigung unabhängig vom Splittbehälter (4) verstellbar ist.

12. Splittstreuer nach Anspruch 11,
dadurch gekennzeichnet,
daß die Mengen-Meßeinrichtung (11) unter Umgehung der Streubohle (9) an einem Streubohlenkasten (6) montiert ist.
